# FASCICULE DE BREVET EUROPEEN

(11) **EP 0 659 611 B1**
(45) Date de publication et mention de la délivrance du brevet: **14.05.1997**
(21) Numéro de dépôt: 94402876.0
(22) Date de dépôt: 14.12.1994
(51) Int. Cl.: B60R 5/04

(54) **Dispositif de maintien de bagages dans un coffre de véhicule**
Gepäck-Rückhaltevorrichtung im Heckabteil eines Kraftfahrzeugs
Luggage retaining device in a vehicle luggage compartment

(30) Priorité: 22.12.1993 FR 9315414
(43) Date de publication de la demande: 28.06.1995
(73) Titulaire: AUTOMOBILES PEUGEOT, 75116 Paris (FR); AUTOMOBILES CITROEN, 92200 Neuilly-sur-Seine (FR)
(72) Inventeur: Mermoz, André, F-78700 Conflans Saint Honorine (FR)
(74) Mandataire: Gendraud, Pierre

(56) Documents cités:
- EP-A- 0 258 823
- FR-A- 2 256 656
- FR-A- 2 409 172
- FR-A- 2 452 571
- FR-A- 2 606 343
- FR-A- 2 689 830
- GB-A- 2 040 833
- US-A- 4 202 577

## Description

L'invention est relative à un dispositif de maintien de bagages placés dans un coffre de véhicule.

Elle se rapporte plus particulièrement aux dispositifs de maintien pour bagages disposés sur un plancher de coffre, derrière un dossier de siège et au-dessous d'un panneau ouvrant à articulation supérieure, dit volet arrière ou hayon.

On connaît, notamment par les demandes de brevets FR-A-2606343 et FR-A-2689830, de tels dispositifs constitués d'un filet élastique sensiblement rectangulaire propre à recouvrir les bagages en étant tendu à ses extrémités grâce à des moyens d'attache les reliant au plancher ou, pour l'avant, à la partie basse du dossier de siège.

Pour effectuer la mise en place des bagages dans le coffre, ou pour les retirer, il est nécessaire de détacher du plancher la partie arrière du filet et de replier celui-ci vers l'avant, par exemple sur le haut du dossier du siège.

L'invention vise à éviter cette manipulation fastidieuse en agençant le dispositif de façon que le filet se soulève automatiquement en dégageant les bagages à l'ouverture du volet arrière. Il est connu, par exemple par le brevet US-A-4,202,577, de soulever automatiquement, à l'ouverture du volet, un écran souple qui délimite supérieurement le coffre en étant fixé au volet à la même hauteur, quand celui-ci est fermé, que le haut du dossier du siège en position d'utilisation.

L'invention concerne un dispositif du type susmentionné à filet élastique sensiblement rectangulaire dont la partie avant est reliée au dossier de siège ou à la caisse du véhicule près de ce dossier, caractérisé en ce que la partie arrière du filet est reliée au volet arrière, près de son bord inférieur, et en ce que les extrémités latérales de la partie avant du filet sont attachées chacune à une patte qui coulisse sur l'un de deux guides sensiblement verticaux solidaires du dossier ou de la caisse du véhicule et qui est reliée au volet par l'un de deux tirants latéraux.

Selon une disposition avantageuse de l'invention, les tirants latéraux sont compressibles.

Un exemple de réalisation du dispositif selon l'invention est décrit ci-après, avec référence aux dessins annexés sur lesquels :
- la Figure 1 est une vue simplifiée en coupe longitudinale d'une partie arrière d'un véhicule équipé du dispositif et d'un volet arrière, ici ouvert au maximum.
- les Figures 2 et 3 sont des vues analogues à la précédente, le volet arrière étant respectivement ouvert à moitié et fermé.
- la Figure 4 est une vue simplifiée en perspective du dispositif et de l'arrière du véhicule, volet fermé.

On voit sur les figures une partie arrière 1 de véhicule dont un coffre 2 est délimité usuellement par un plancher 3, un dossier de siège 4 et un volet 5 s'articulant suivant son bord transversal supérieur 6, tandis que son bord transversal inférieur 7 repose, en position de fermeture (Fig. 3), sur un panneau d'extrémité arrière du coffre.

Un filet rectangulaire 8, de préférence élastique, est attaché par ses deux extrémités latérales avant à deux pattes 9 coulissant sur des éléments de guidage sensiblement verticaux 10, et par ses deux extrémités latérales arrière 11 au volet 5, près de son bord inférieur 7. Ces guides 10 sont fixés sur les bords arrière latéraux du dossier 4 du siège ou, en variante, près de ce dossier, sur les panneaux latéraux de la caisse du véhicule qui délimitent le coffre 2 en largeur.

Les pattes 9 sont reliées chacune au volet 5, à peu près à mi-distance entre ses bords supérieur 6 et inférieur 7, par un tirant latéral 12 s'articulant à ses deux extrémités.

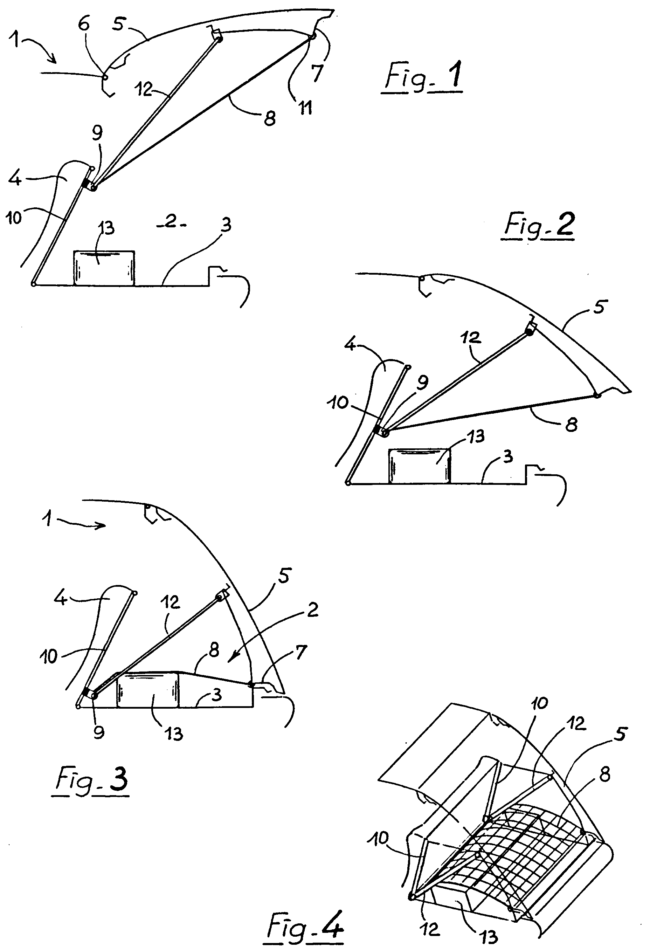

Quand le volet est soulevé jusqu'à son ouverture maximale (Fig. 1) les tirants 12 font coulisser les pattes 9 jusqu'à la partie haute des guides 10. Les quatre extrémités du filet sont alors placées suffisamment haut, surtout celles accrochées au volet, pour procurer un accès maximal au coffre, par exemple pour y disposer un bagage 13.

Lorsqu'on rabaisse le volet (Fig. 2), les tirants 12 poussent les pattes coulissantes 9 vers le bas et le filet s'abaisse entièrement jusqu'à ce qu'en position de fermeture du volet (Fig. 3 et 4), ses extrémités avant se trouvent en bas des guides 10 et du dossier 4, et ses extrémités arrière près du panneau d'extrémité arrière du coffre, le filet 8 recouvrant alors le bagage 13 en le maintenant sur le plancher par tension entre ses extrémités.

Le filet est élastique de manière qu'il puisse adapter sa forme et sa tension de maintien à des bagages de diverses dimensions.

En variante non représentée, pour augmenter cette capacité à maintenir des bagages plus ou moins volumineux, les tirants sont compressibles, et notamment télescopiques comme des vérins à gaz couramment utilisé pour assister le soulèvement d'un hayon, de manière que lors de l'abaissement du volet 5 les pattes 9 peuvent s'immobiliser sur leur guide 10 à n'importe quelle hauteur, dépendant du volume des bagages, les tirants se trouvant par suite comprimés en fin de course de fermeture.

Dans tous les cas, le filet est automatiquement soulevé à l'ouverture du volet, grâce à l'accrochage sur celui-ci de ses extrémités arrière, ce qui procure un bon accès aux bagages sans aucune manipulation du filet.

## Revendications

1. Dispositif de maintien de bagages placés sur le plancher d'un coffre de véhicule, derrière un dossier de siège et au-dessous d'un volet à articulation supérieure, comportant un filet élastique sensiblement rectangulaire dont la partie avant est reliée au dossier, ou à la caisse du véhicule près de ce dossier,
caractérisé en ce que la partie arrière du filet (8) est reliée au volet (5), près de son bord inférieur (7) et en ce que les extrémités latérales de la partie avant du filet (8) sont attachées chacune à une patte (9) qui coulisse sur l'un de deux guides sensiblement verticaux (10) et qui est reliée au volet (5) par l'un de deux tirants latéraux (12).

2. Dispositif selon la revendication 1,
caractérisé en ce que les tirants (12) sont compressibles.

3. Dispositif selon l'une des revendications 1 ou 2,
caractérisé en ce que les deux guides (10) sont fixés au dossier (4).

4. Dispositif selon l'une des revendications 1 ou 2,
caractérisé en ce que les deux guides (10) sont fixés près du dossier, à des panneaux latéraux délimitant le coffre (2).

## Claims

1. Device for holding luggage placed on the floor of a vehicle luggage compartment, behind a seat-back and below an upward-hinging flap, comprising a substantially rectangular elastic net, the front portion of which is connected to the seat-back, or to the body of the vehicle near this seat-back,
characterised in that the rear portion of the net (8) is connected to the flap (5), near its lower edge (7), and
in that the lateral extremities of the front portion of the net (8) are each attached to a lug (9) which slides on one of two substantially vertical guides (10) and which is connected to the flap (5) by one of two vertical braces (12).

2. Device according to Claim 1,
characterised in that the braces (12) are compressible.

3. Device according to one of Claims 1 or 2,
characterised in that the two guides (10) are fastened to the seat-back (4).

4. Device according to one of Claims 1 or 2,
characterised in that the two guides (10) are fastened near the seat-back, to lateral panels delimiting the luggage compartment (2).

## Patentansprüche

1. Vorrichtung zum Halten von Gepäckstücken, die auf dem Boden eines Fahrzeug-Gepäckraums angeordnet sind, hinter einer Sitzlehne und unter einer oben gelenkig gelagerten Klappe, mit einem elastischen, im wesentlichen rechteckigen Netz, dessen vorderer Teil mit der Klappe oder mit dem Fahrzeugaufbau nahe dieser Klappe verbunden ist,
dadurch gekennzeichnet, daß der hintere Abschnitt des Netzes (8) mit der Klappe (5) nahe ihrem unteren Rand (7) verbunden ist, und daß die seitlichen Enden des vorderen Abschnitts des Netzes (8) jeweils an einer Lasche (9) angebracht sind, die auf einer zweier im wesentlichen vertikaler Führungen (10) gleitet und die durch einen zweier seitlicher Zugstäbe (12) mit der Klappe (5) verbunden ist.

2. Vorrichtung nach Anspruch 1, ddurch gekennzeichnet, daß die Zugstäbe (12) zusammendrückbar sind.

3. Vorrichtung nach einem der Ansprüche 1 oder 2, dadurch gekennzeichnet, daß die beiden Führungen (10) an der Rücklehne (4) befestigt sind.

4. Vorrichtung nach einem der Ansprüche 1 oder 2, dadurch gekennzeichnet, daß die beiden Führungen (10) nahe der Rücklehne an den beiden seitlichen Wandteilen befestigt sind, die den Gepäckraum (2) beschließen.
